(19) Europäisches Patentamt
European Patent Office
Office européen des brevets

(11) **EP 3 483 689 A1**

(12) **EUROPEAN PATENT APPLICATION**

(43) Date of publication:
**15.05.2019 Bulletin 2019/20**

(51) Int Cl.:
**G05D 1/02** (2006.01)

(21) Application number: **18181093.8**

(22) Date of filing: **02.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2017 KR 20170150589**

(71) Applicant: **Sonnet Co., Ltd.**
**Daegu 42988 (KR)**

(72) Inventor: **SON, Joon Woo**
**Seoul 04421 (KR)**

(74) Representative: **Roos, Peter**
**c/o Roospatent**
**Noldinstrasse 7**
**81545 München (DE)**

(54) **APPARATUS FOR AUTONOMOUS DRIVING ALGORITHM DEVELOPMENT USING DAILY DRIVING DATA AND METHOD USING THE SAME**

(57) The present invention relates to an apparatus for autonomous driving algorithm development using daily driving data and a method using the same, the apparatus including: a data obtaining unit configured to receive daily driving data including a front photographed image, GPS information, acceleration sensor data, and vehicle driving data of a vehicle from a terminal mounted inside the vehicle; a data control unit configured to perform preliminary learning using the daily driving data to evaluate accuracy thereof, and store the daily driving data in a connected database if the accuracy above a threshold is calculated; a data preprocessing unit configured to match view angles of a road image of the front photographed image in the daily driving data stored in the database with an image conversion technique, and pre-process the daily driving data by converting the acceleration sensor data into acceleration components; a machine learning unit configured to learn the pre-processed daily driving data by applying it to an autonomous driving algorithm through a preset machine learning engine; a route model-generating unit configured to reconfigure, using the learned autonomous driving algorithm, the autonomous driving algorithm according to a route to be currently driven; and an autonomous driving control unit configured to provide a command for controlling the autonomous driving vehicle, which corresponds to the reconfigured autonomous driving algorithm, to a vehicle to be currently driven.

FIG. 2

**Description**

**CROSS-REFERENCE TO RELATED APPLICATION**

This application claims priority to and the benefit of Korean Patent Application No. 10-2017-0150589 filed in the Korean Intellectual Property Office on November 13, 2017, the entire contents of which are incorporated herein by reference.

## BACKGROUND OF THE INVENTION

**(a) Field of the Invention**

The present invention relates to an apparatus for autonomous driving algorithm development using daily driving data and a method using the same, and more particularly, to an apparatus and a method for building up big data required for developing an autonomous vehicle using various daily driving data and developing an autonomous driving algorithm by using the daily driving data.

**(b) Description of the prior art**

Recently, with the recent development of automotive technology, autonomous vehicles that can operate on their own without the driver's intervention is expected to rapidly increase.
Because autonomous vehicles have a merit of preventing accidents due to careless mistakes or aggressive forms of driving caused by drivers, and even the unlicensed, the blind, and a person under age can freely use the autonomous vehicles, a lot of researches are recently being conducted on controlling the autonomous driving.
However, the road environments in which the actual vehicles are driven are unpredictable, and there are also many possible variables, and therefore, actual driving data of lots of vehicles should be used to develop an autonomous driving algorithm, so as to provide safe and accurate autonomous driving. In other words, a vast amount of driving data is required for developing a machine learning-based autonomous driving algorithm.
However, since it takes a lot of time and money to build up big data for autonomous driving on various roads, it is difficult to build up the big data for the autonomous driving.
Therefore, a technology of developing an autonomous driving algorithm using normal driving data and efficiently building up big data is required.
The background art of the present invention is disclosed in Korean Patent Laid-Open Publication No. 10-2015-0066303 (published on June 16, 2016).

## SUMMARY OF THE INVENTION

The present invention has been particularly made in an effort to provide an apparatus for building up, using various daily driving data, big data required for developing an autonomous vehicle and developing an autonomous driving algorithm using the daily driving data, and a method using the same.
To achieve these technical objects, according to an exemplary embodiment of the present invention, an apparatus for autonomous driving algorithm development includes: a data obtaining unit configured to receive daily driving data including a front photographed image, GPS information, acceleration sensor data, and vehicle driving data of a vehicle from a terminal mounted inside the vehicle; a data control unit configured to perform preliminary learning using the daily driving data to evaluate accuracy thereof, and store the daily driving data in a connected database if the accuracy above a threshold is calculated; a data pre-processing unit configured to match view angles of a road image of the front photographed image in the daily driving data stored in the database with an image conversion technique, and pre-process the daily driving data by converting the acceleration sensor data into acceleration components; a machine learning unit configured to learn the pre-processed daily driving data by applying it to an autonomous driving algorithm through a preset machine learning engine; a route model-generating unit configured to reconfigure, using the learned autonomous driving algorithm, the autonomous driving algorithm according to a route to be currently driven; and an autonomous driving control unit configured to provide a command for controlling the autonomous driving vehicle, which corresponds to the reconfigured autonomous driving algorithm, to a vehicle to be currently driven.
The terminal may obtain, using a camera, a GPS, and an acceleration sensor which are built inside the terminal, sensor data including the front photographed image, the GPS information, and the acceleration sensor data; and obtain vehicle information via communication with a control system inside the vehicle, so as to synchronize the vehicle information with the sensor data.
The data control unit may, after randomly mixing the received daily driving data, extract N% (N is a natural number) and classify them as test data and perform the preliminary learning by using the remaining data except for N% from the entire daily driving data; and evaluate accuracy of the result of the preliminary learning via a cross validation technique for machine learning, which evaluates the result of the preliminary learning by using the test data.

The data pre-processing unit may extract center point coordinates by detecting marks attached to upper and lower ends of the vehicle's front glass from the front photographed image; find a horizontal line adjacent to the mark at the lower end and rotate the entire image such that they are parallel to each other; and match the view angles such that the marks at the upper and lower ends are positioned at a center of the image through image conversion.

The data pre-processing unit may extract an acceleration measurement period in which the vehicle is stopped for a predetermined time or longer; and convert the acceleration into a vertical component $ACC_{Lon}$ and a horizontal component $ACC_{Lat}$ by using the following Equation:

$$ACC_{Lon} = Ay*\sin\phi_x + Az*\sin(90° - \phi_x) + Ax*\sin\phi_y + Az*\sin(90° - \phi_y)$$

$$ACC_{Lat} = Ax*\sin\phi_y + Az*\sin(90° - \phi_y) + Ay*\sin\phi_x + Az*\sin(90° - \phi_x)$$

$$\phi_x = atan\ (abs(g_z/g_y))$$

$$\phi_y = atan\ (abs(g_z/g_x))$$

Herein, $\phi_x$ represents a tilt angle for an x-axis of the terminal, and $\phi_y$ represents a tilt angle for a y-axis, Ax, Ay, and Az respectively represent x-axis, y-axis, and z-axis values that are measured by the acceleration sensor, and gx, gy, and gz respectively represent gravitational acceleration values of the x-axis, the y-axis, and a z-axis.

The machine learning unit may learn, through individual autonomous driving algorithms corresponding to respective driving characteristics, the entire daily driving data with a general autonomous driving algorithm; and separately learn the daily driving data that are classified according to at least one of driving characteristics including the type of driving road, the shape of driving road, a route change on a specific road, driving at a specific time, and the weather while driving.

The route model-generating unit may, when a learned model of the machine learning corresponding to the route to be driven exists, select an autonomous driving algorithm of the learned model of the corresponding machine learning; and when a learned model of the machine learning corresponding to the route to be driven does not exist, subdivide the route to be driven, and combine the individual autonomous driving algorithms corresponding to the subdivided routes so as to reconfigure the autonomous driving algorithm customized to the route.

According to another exemplary embodiment of the present invention, a method for developing an autonomous driving algorithm using an apparatus for autonomous driving algorithm development includes: receiving daily driving data including a front photographed image, GPS information, acceleration sensor data, and vehicle driving data of a vehicle from a terminal mounted inside the vehicle, performing preliminary learning using the daily driving data to evaluate accuracy thereof, and storing the daily driving data in a connected database if the accuracy above a threshold is calculated; matching view angles of a road image of the front photographed image in the daily driving data stored in the database with an image conversion technique, and pre-processing the daily driving data by converting the acceleration sensor data into acceleration components; learning the pre-processed daily driving data by applying it to the autonomous driving algorithm through a preset machine learning engine; reconfiguring, using the learned autonomous driving algorithm, the autonomous driving algorithm according to a route to be currently driven; and providing a command for controlling the autonomous driving vehicle, which corresponds to the reconfigured autonomous driving algorithm, to a vehicle to be currently driven.

According to the present invention, daily driving data of general drivers who control their vehicles can be used to build up big data for autonomous driving, and quality of the daily driving data can be pre-validated through preliminary learning, thereby avoiding learning error due to data and saving cost and time for building up the big data.

In addition, the daily driving data collected in consideration of how the terminal is positioned inside the vehicle can be corrected via pre-processing so as to improve consistency of the data, thereby making it possible to quickly and accurately develop the autonomous driving algorithm.

**BRIEF DESCRIPTION OF THE DRAWINGS**

FIG. 1 is a diagram for describing a system for autonomous driving algorithm development according to an exemplary embodiment of the present invention.

FIG. 2 is a schematic diagram of an apparatus for autonomous driving algorithm development according to an exemplary embodiment of the present invention.

FIG. 3 is a flowchart of a method for developing an autonomous driving algorithm using an apparatus for autonomous driving algorithm development according to an exemplary embodiment of the present invention.

FIGS. 4 and 5 are diagrams illustrating a process of pre-processing photographed images of an apparatus for autonomous driving algorithm development according to an exemplary embodiment of the present invention.

FIG. 6 is a diagram illustrating a process of estimating, by an apparatus for autonomous driving algorithm development according to an exemplary embodiment of the present invention, a position of a terminal using gravitational acceleration.

## DETAILED DESCRIPTION OF THE EMBODIMENTS

Embodiments of the present invention will now be described in detail with reference to the accompanying drawings so that those skilled in the art can easily carry out the present invention. As those skilled in the art would realize, the described embodiments may be modified in various different ways, all without departing from the spirit or scope of the present invention. Accordingly, the drawings and description are to be regarded as illustrative in nature and not restrictive, and like reference numerals designate like elements throughout the specification.

Throughout the specification, unless explicitly described to the contrary, the word "comprise" and variations such as "comprises" or "comprising" will be understood to imply the inclusion of stated elements but not the exclusion of any other elements.

The present invention will be described more fully hereinafter with reference to the accompanying drawings, in which exemplary embodiments of the invention are shown.

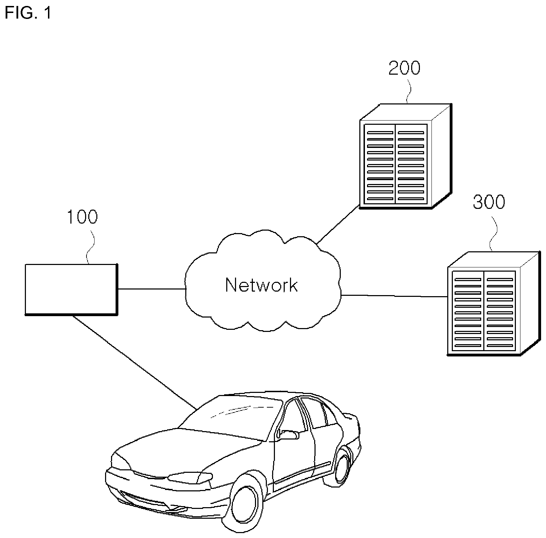

With reference to FIG. 1, a system for autonomous driving algorithm development using daily driving data according to an exemplary embodiment of the present invention will now be described in detail.

FIG. 1 is a diagram for describing a system for autonomous driving algorithm development according to an exemplary embodiment of the present invention.

As shown in FIG. 1, a system for autonomous driving algorithm development includes a terminal 100, an apparatus 200 for autonomous driving algorithm development, and a database 300.

First, the terminal 100, which can be attached to or detached from or mounted on a vehicle, includes a camera, a GPS, and an acceleration sensor that are built inside the vehicle, and measures sensor information through respective sensors.

In addition, the terminal 100 can collect, through communication with a control system of the vehicle, driving information, that is, information on operation states of respective parts of the vehicle that are required for driving the vehicle, including speed information, steering information, pedal information, etc.

The terminal 100 can synchronize the sensor information and the driving information with respect to each other, and store them in a storage space in the terminal 100, and transmit daily driving data including the sensor information and the driving information to the apparatus 200 for autonomous driving algorithm development in real-time or at predetermined time intervals.

In this case, the terminal 100 can be implemented as a smartphone, a smart pad, a tablet, a navigation, a black box, and the like, but it is not limited thereto.

Next, the apparatus 200 for autonomous driving algorithm development can evaluate accuracy of the daily driving data that is received from terminal 100 through preliminary learning, and if the accuracy above a threshold is calculated, store the daily driving data in the database 300.

That is, the apparatus 200 for autonomous driving algorithm development can pre-validate quality of the collected daily driving data, thereby excluding invalid data.

Then, the apparatus 200 for autonomous driving algorithm development corrects the daily driving data stored in the database 300 in consideration of how the terminal is positioned, and applies the daily driving data to the autonomous driving algorithm to learn it.

Next, the database 300 stores therein data, accuracy of which is above a threshold, and is connected to apparatus 200 for autonomous driving algorithm development via a wired or wireless network, so as to transmit/receive the data.

Further, the database 300 can store therein the verified daily driving data, as well as driving characteristic information classified by the apparatus 200 for autonomous driving algorithm development.

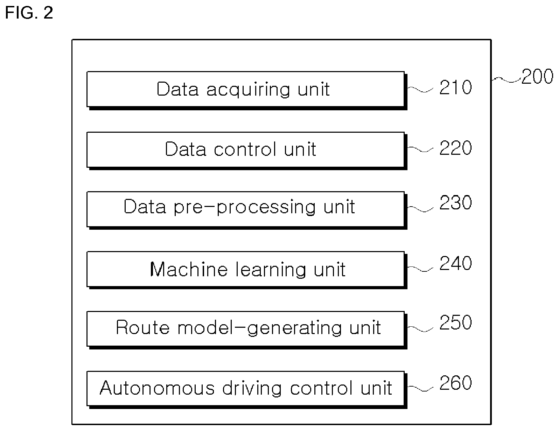

With reference to FIG. 2, an apparatus for autonomous driving algorithm development using daily driving data according to an exemplary embodiment of the present invention will now be described in detail.

FIG. 2 is a schematic diagram of an apparatus for autonomous driving algorithm development according to an exemplary embodiment of the present invention.

As shown in FIG. 2, an apparatus 200 for autonomous driving algorithm development includes a data acquiring unit 210, a data control unit 220, a data pre-processing unit 230, a machine learning unit 240, a route model generating unit 250, and an autonomous driving control unit 260.

First, the data acquiring unit 210 acquires daily driving data in real-time or at predetermined time intervals through wired or wireless communication with a terminal mounted inside a vehicle 100.

That is, the data acquiring unit 210 receives, from the terminal 100, the daily driving data including front photographed image, GPS information, acceleration sensor data, and vehicle driving data of the vehicle.

Next, the data control unit 220 performs preliminary learning using the daily driving data, and then evaluates accuracy thereof. In this case, the data control unit 220 can use a cross validation technique on a machine learning result to evaluate the accuracy, and the method for evaluating the accuracy is not limited thereto.

Then, the data control unit 220 stores the daily driving data in the connected database 300 if the accuracy above a threshold is calculated.

Next, the data pre-processing unit 230 matches view angles of a road image of the front photographed image from the daily driving data stored in the database 300 with the image conversion technique, and converts the acceleration sensor data into acceleration components.

That is, the data pre-processing unit 230 detects marks attached to the vehicle's front glass, extracts the center point coordinates, performs image pre-processing through affine transformation, and converts the acceleration sensor data into vertical and horizontal acceleration components according to the vehicle's coordinate system.

Next, the machine learning unit 240 applies the pre-processed daily driving data to the autonomous driving algorithm via a preset machine learning engine, and learns it.

The machine learning unit 240 can use GPS information or time information to calculate and classify driving characteristics from the daily driving data, and separately applying the daily driving data to individual autonomous driving algorithms according to the driving characteristics and learn it.

The route model generating unit 250 reconfigures, using the learned autonomous driving algorithm, the autonomous driving algorithm according to a route to be currently driven. That is, when there is a model by which machine learning is made using the data that matches with an autonomous driving route to be driven, the route model generating unit 250 selects the model, and when there is no machine learning algorithm for the corresponding route, individual autonomous driving algorithms can be combined to generate a customized route-learning model.

Next, the autonomous driving control unit 260 can calculate, using the model provided by the route model generating unit 250, a command for controlling autonomous driving, and provides the corresponding steering, acceleration, and deceleration commands to the autonomous vehicle.

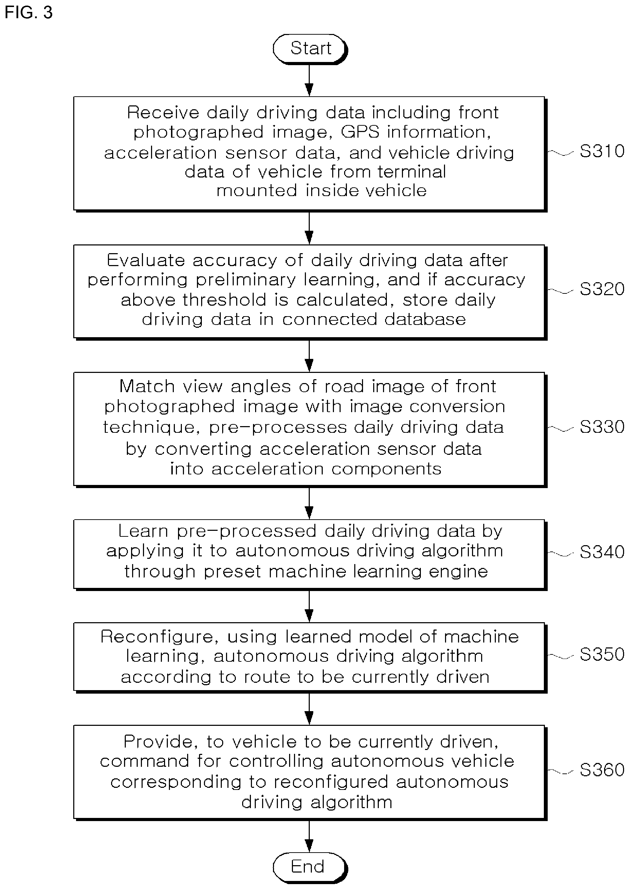

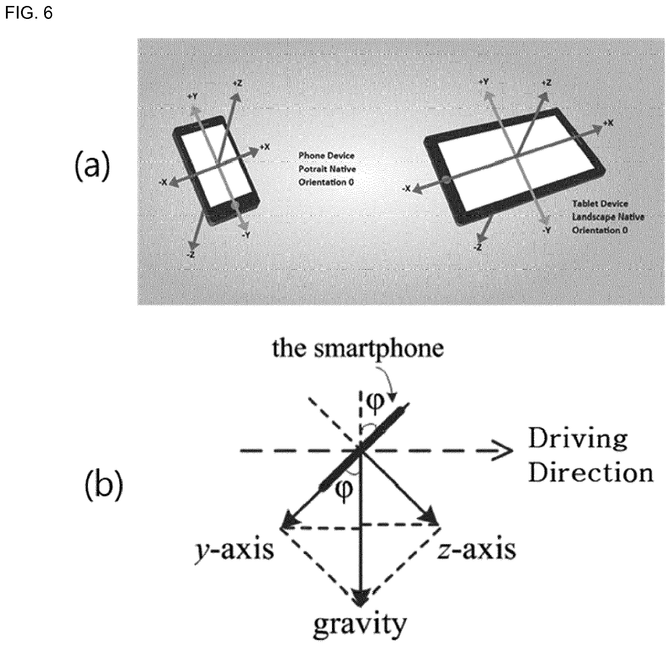

With reference to FIG. 3 and FIG. 6, a method for developing, by an apparatus for autonomous driving algorithm development, an autonomous driving algorithm using daily driving data will now be described in detail.

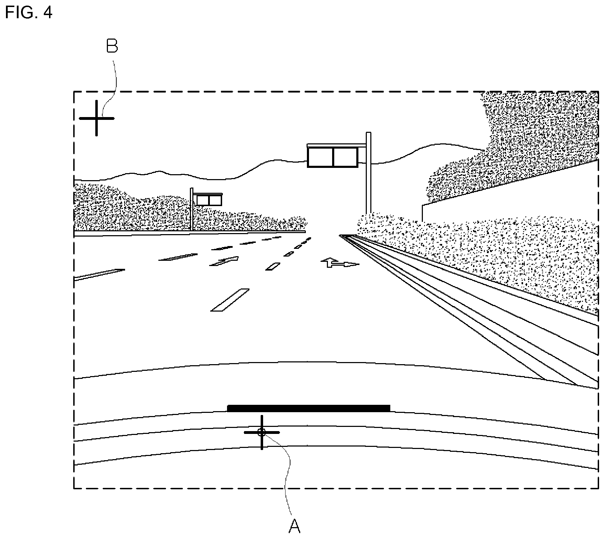

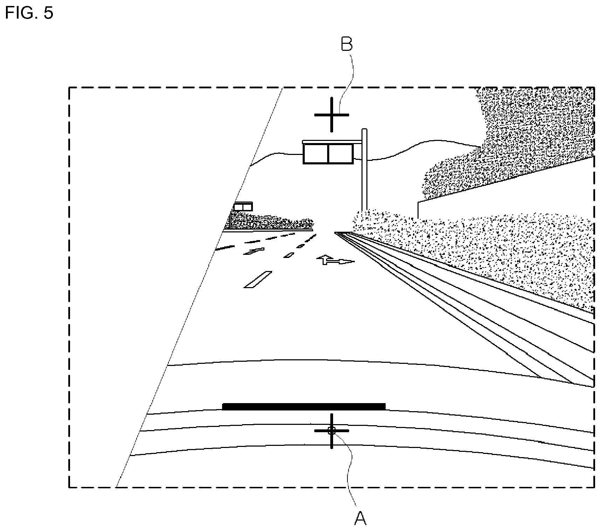

FIG. 3 is a flowchart of a method for autonomous driving algorithm development of an apparatus for autonomous driving algorithm development according to an exemplary embodiment of the present invention, and FIGS. 4 and 5 are diagrams illustrating a process of pre-processing a photographed image of an apparatus for autonomous driving algorithm development according to an exemplary embodiment of the present invention. FIG. 6 is a diagram illustrating a process of estimating, by an apparatus for autonomous driving algorithm development according to an exemplary embodiment of the present invention, a position of a terminal using gravitational acceleration.

As shown in FIG. 3, an apparatus 200 for autonomous driving algorithm development receives daily driving data including front photographed image, GPS information, acceleration sensor data, and vehicle driving data of a vehicle from a terminal 100 mounted inside the vehicle (S310).

In this case, the terminal 100 acquires, using a camera, a GPS, an acceleration sensor that are built therein, sensor data including the front photographed image, the GPS information, the acceleration sensor data of the vehicle to be driven. At this point, the terminal 100 can obtain various sensor data according to the type of built-in sensor, and can obtain various information such as weather information through web sites or applications that are separately connected to the network.

When obtaining vehicle information through communication with a control system inside the vehicle, the terminal 100 synchronizes the sensor data and the vehicle information to generate the daily driving data.

The apparatus 200 for autonomous driving algorithm development can receive the generated daily driving data from the terminal 100 in real-time or at predetermined time intervals.

Next, the apparatus 200 for autonomous driving algorithm development evaluates accuracy of the daily driving data after performing preliminary learning, and if the accuracy above a threshold is calculated, stores the daily driving data in the connected database (S320).

The apparatus 200 for autonomous driving algorithm development randomly mixes the received daily driving data, and then extracts N% (N is a natural number) and classifies them as test data.

For example, the apparatus 200 for autonomous driving algorithm development can randomly mix the entire daily driving data, classify 20 % of the daily driving data as test data, and use the remaining 80% of the daily driving data to perform the preliminary learning.

The apparatus 200 for autonomous driving algorithm development can use the test data, that is, 20% of the daily driving data, to evaluate the accuracy of the result of the preliminary learning.

In this case, the apparatus 200 for autonomous driving algorithm development can repeatedly perform the process of evaluating the accuracy until the learning rate rarely changes (for example, less than 0.01%) or the process is performed a predetermined number of times.

Then, the apparatus 200 for autonomous driving algorithm development can repeat the entire process of performing the preliminary learning and evaluating the accuracy a predetermined number of times to calculate average prediction accuracy, and estimate the daily driving data as being normal data if the calculated average prediction accuracy is equal to or greater than a threshold (300).

Next, the apparatus 200 for autonomous driving algorithm development matches view angles of a road image of the front photographed image with image conversion technique, and pre-processes the daily driving data by converting the acceleration sensor data into acceleration components (S330).

The apparatus 200 for autonomous driving algorithm development according to the current exemplary embodiment of the present invention detects marks attached to upper and lower ends of the vehicle's front glass from the front photographed image, thereby extracting center point coordinates.

As shown in FIG. 4, a lower mark A and an upper left mark B are attached to the vehicle's front glass, and the mark A and the mark B are detected from the front photographed image of the vehicle.

In FIG. 4, the mark A and the mark B are shown as a circle, but in addition to the circle, the marks can have various shapes such as an elliptical shape, a linear shape, a specific figure, etc.

The apparatus 200 for autonomous driving algorithm development can detect the marks at the upper and lower ends through an image matching method for comparing a pre-stored reference image and the front photographed image. Alternatively, when the shapes of the marks attached to the vehicle's front glass are pre-stored, the apparatus 200 for autonomous driving algorithm development can use the method of detecting the corresponding specific shapes from the front photographed image, and the method for mark detection as described above is not necessarily limited to a specific detection method by way of example.

The apparatus 200 for autonomous driving algorithm development can find a horizontal line adjacent to the lower mark A of the vehicle's front glass, such that the entire image is rotated to be parallel to the horizontal line. In this case, the horizontal line adjacent to the lower mark means that a curve represented by a vehicle dashboard, a hood or the like is approximated as a straight line.

As shown in FIG. 5, the apparatus 200 for autonomous driving algorithm development can perform an affine transformation to pre-process the image such that the upper and lower marks A and B of the vehicle's front glass are positioned at the center of the image.

In this case, the affine transformation represents a transformation method for preserving a straight line, a ratio of the length (distance), and the parallelism, and such an image conversion method is not limited to a specific transformation method by way of example.

In addition, the apparatus 200 for autonomous driving algorithm development can extract, from the daily driving data, an acceleration measurement period in which the vehicle is stopped for a predetermined time or longer. For example, the apparatus 200 for autonomous driving algorithm development can check a state in which the vehicle's speed is 0 km/h, or extract a period during which acceleration of 0 does not change for 3 seconds.

FIG. 6A is a diagram illustrating directions of respective axes according to the type of terminal, and FIG. 6B is a diagram illustrating showing a vertical downward component using gravity acceleration.

As shown in FIG. 6, the apparatus 200 for autonomous driving algorithm development can detect the vertical downward component using gravitational acceleration. In this case, the apparatus 200 for autonomous driving algorithm development can calculate a tilt angle of the x-axis and a tilt angle of the y-axis of the terminal 100, and the calculated tilt angles of the x-axis and the y-axis can be used to obtain the calculated vertical and horizontal components.

That is, the apparatus 200 for autonomous driving algorithm development can convert the acceleration measurement period into a vertical component $ACC_{Lon}$ and a horizontal component $ACC_{Lat}$ by using the following Equation 1.

(Equation 1)

$$ACC_{Lon} = Ay*sin\phi_x + Az*sin(90° - \phi_x) + Ax*sin\phi_y + Az*sin(90° - \phi_y)$$

$$ACC_{Lat} = Ax*sin\phi_y + Az*sin(90° - \phi_y) + Ay*sin\phi_x + Az*sin(90° - \phi_x)$$

$$\phi_x = atan\ (abs(g_z/g_y))$$

$$\phi_y = atan\ (abs(g_z/g_x))$$

In this case, $\phi_x$ represents a tilt angle for the x-axis of the terminal, $\phi_y$ represents a tilt angle for the y-axis, Ax, Ay, and Az respectively represent x-axis, y-axis, and z-axis values measured by the acceleration sensor, and gx, gy, and gz respectively represent gravitational acceleration values of the x-axis, y-axis, and z-axis.

Next, the apparatus 200 for autonomous driving algorithm development learns pre-processed daily driving data by applying it to the autonomous driving algorithm through a preset machine learning engine (S340).

In this case, the apparatus 200 for autonomous driving algorithm development can learn the entire daily driving data with the autonomous driving algorithm.

On the other hand, the apparatus 200 for autonomous driving algorithm development can classify, using GPS information, time information, or weather information, the daily driving data according to driving characteristics of the daily driving data.

For example, the apparatus 200 for autonomous driving algorithm development can classify the daily driving data into data for highway driving, driving straight through the intersection, a left turn at the intersection, a right turn at the intersection, driving at night, driving on a rainy day.

In this case, the information on which classification of the driving characteristics are based, such as GPS information, time information, or weather information, can be collected through the terminal 100 or through communication with individual sites or applications.

That is, the apparatus 200 for autonomous driving algorithm development can separately learn the daily driving data, which is classified by at least one of the driving characteristics including the kind of driving road, the shape of the driving road, route change on a specific road, driving at a specific time and weather while driving, with individual driving algorithms corresponding to each driving characteristic.

Next, the apparatus 200 for autonomous driving algorithm development reconfigures, using the learned model of machine learning, the autonomous driving algorithm according to a route to be currently driven (S350).

In this case, if there is a model in which the machine learning is performed through the data that matches with the autonomous driving route to be driven, the corresponding machine learning algorithm is provided, and if there is no machine learning algorithm for the autonomous driving route to be driven, the individual driving algorithms can be combined to generate a route-customized learning model.

That is, it is possible to generate the route-customized machine learning algorithm by subdividing the route to be driven and combining the individual autonomous driving algorithms corresponding to each of the subdivided routes.

Next, the apparatus 200 for autonomous driving algorithm development can provide, to the vehicle to be currently driven, a command for controlling the autonomous vehicle corresponding to the reconfigured autonomous driving algorithm (S360).

That is, the apparatus 200 for autonomous driving algorithm development can calculate a command for controlling the autonomous driving of the vehicle including steering, acceleration, and deceleration commands through the reconfigured autonomous driving algorithm, and provides the command for controlling the autonomous driving to the vehicle or a simulation device.

On the other hand, in order to receive daily driving data from terminals 100 of a plurality of drivers, build up big data, and learn the autonomous driving algorithm, the apparatus 200 for autonomous driving algorithm development can provide specific points or various rewards to the providers who provide the respective daily driving data. In this case, the apparatus 200 for autonomous driving algorithm development provides specific points or various rewards only to the provider who provides quality-verified daily driving data as in the case where the received daily driving data is learned through the preliminary learning and the accuracy thereof is equal to or greater than a predetermined threshold.

That is, the apparatus 200 for autonomous driving algorithm development can select the data providers through the pre-verification before applying the algorithm, and provide rewards, thereby shortening the reward period for the data providers to provide specific points or various rewards to them.

As described above, according to the current exemplary embodiment of the present invention, it is possible to use the daily driving data of general drivers, who control their vehicles, in building up big data for the autonomous driving and pre-validating quality of the driving data through preliminary learning, thereby avoiding errors in learning as well as saving time and cost for building up the big data.

Further, it is possible to improve consistency of the data by correcting the collected daily driving data in consideration of how the terminal inside the vehicle is positioned through a pre-processing process, thereby quickly and accurately developing the autonomous driving algorithm.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Consequently, the true technical protective scope of the present invention must be determined based on the technical spirit of the appended claims.

**<Description of Symbols>**

| | |
|---|---|
| 100: terminal | 200: apparatus for autonomous driving algorithm development |
| 210: data acquiring unit | 220: data control unit |
| 230: data pre-processing unit | 240: machine learning unit |
| 250: route model generating unit | 260: autonomous driving control unit |
| 300: database | |

**Claims**

1. An apparatus for autonomous driving algorithm development comprising:

   a data obtaining unit configured to receive daily driving data including a front photographed image, GPS information, acceleration sensor data, and vehicle driving data of a vehicle from a terminal mounted inside the vehicle;
   a data control unit configured to perform preliminary learning using the daily driving data to evaluate accuracy thereof, and store the daily driving data in a connected database if the accuracy above a threshold is calculated;
   a data pre-processing unit configured to match view angles of a road image of the front photographed image in the daily driving data stored in the database with an image conversion technique, and pre-process the daily driving data by converting the acceleration sensor data into acceleration components;
   a machine learning unit configured to learn the pre-processed daily driving data by applying it to an autonomous driving algorithm through a preset machine learning engine;
   a route model-generating unit configured to reconfigure, using the learned autonomous driving algorithm, the autonomous driving algorithm according to a route to be currently driven; and
   an autonomous driving control unit configured to provide a command for controlling the autonomous driving vehicle, which corresponds to the reconfigured autonomous driving algorithm, to a vehicle to be currently driven.

2. The apparatus of claim 1, wherein
   the terminal is configured to:
   obtain, using a camera, a GPS, and an acceleration sensor which are built inside the terminal, sensor data including the front photographed image, the GPS information, and the acceleration sensor data; and obtain vehicle information via communication with a control system inside the vehicle, so as to synchronize the vehicle information with the sensor data.

3. The apparatus of claim 2, wherein
   the data control unit is configured to:
   after randomly mixing the received daily driving data, extract N% (N is a natural number) and classify them as test data and perform the preliminary learning by using the remaining data except for N% from the entire daily driving data; and evaluate accuracy of the result of the preliminary learning via a cross validation technique for machine learning, which evaluates the result of the preliminary learning by using the test data.

4. The apparatus of claim 3, wherein
   the data pre-processing unit is configured to:

extract center point coordinates by detecting marks attached to upper and lower ends of the vehicle's front glass from the front photographed image; find a horizontal line adjacent to the mark at the lower end and rotate the entire image such that they are parallel to each other; and match the view angles such that the marks at the upper and lower ends are positioned at a center of the image through image conversion.

5. The apparatus of claim 4, wherein
the data pre-processing unit is configured to
extract an acceleration measurement period in which the vehicle is stopped for a predetermined time or longer; and convert the acceleration into a vertical component $ACC_{Lon}$ and a horizontal component $ACC_{Lat}$ by using the following Equation:

$$ACC_{Lon} = Ay*\sin\phi_x + Az*\sin(90° - \phi_x) + Ax*\sin\phi_y + Az*\sin(90° - \phi_y)$$

$$ACC_{Lat} = Ax*\sin\phi_y + Az*\sin(90° - \phi_y) + Ay*\sin\phi_x + Az*\sin(90° - \phi_x)$$

$$\phi_x = atan\ (abs(g_z/g_y))$$

$$\phi_y = atan\ (abs(g_z/g_x))$$

wherein, $\phi_x$ represents a tilt angle for an x-axis of the terminal, and $\phi_y$ represents a tilt angle for a y-axis, Ax, Ay, and Az respectively represent x-axis, y-axis, and z-axis values that are measured by the acceleration sensor, and gx, gy, and gz respectively represent gravitational acceleration values of the x-axis, the y-axis, and a z-axis.

6. The apparatus of claim 5, wherein
the machine learning unit is configured to:
learn, through individual autonomous driving algorithms corresponding to respective driving characteristics, the entire daily driving data with a general autonomous driving algorithm; and separately learn the daily driving data that are classified according to at least one of driving characteristics including the type of driving road, the shape of driving road, a route change on a specific road, driving at a specific time, and the weather while driving.

7. The apparatus of claim 6, wherein
the route model-generating unit is configured to:

when a learned model of the machine learning corresponding to the route to be driven exists, select an autonomous driving algorithm of the learned model of the corresponding machine learning; and
when a learned model of the machine learning corresponding to the route to be driven does not exist, subdivide the route to be driven, and combine the individual autonomous driving algorithms corresponding to the subdivided routes so as to reconfigure the autonomous driving algorithm customized to the route.

8. A method for developing an autonomous driving algorithm using an apparatus for autonomous driving algorithm development comprising:

receiving daily driving data including a front photographed image, GPS information, acceleration sensor data, and vehicle driving data of a vehicle from a terminal mounted inside the vehicle, performing preliminary learning using the daily driving data to evaluate accuracy thereof, and storing the daily driving data in a connected database if the accuracy above a threshold is calculated;
matching view angles of a road image of the front photographed image in the daily driving data stored in the database with an image conversion technique, and pre-processing the daily driving data by converting the acceleration sensor data into acceleration components;
learning the pre-processed daily driving data by applying it to the autonomous driving algorithm through a preset machine learning engine;
reconfiguring, using the learned autonomous driving algorithm, the autonomous driving algorithm according to a route to be currently driven; and
providing a command for controlling the autonomous driving vehicle, which corresponds to the reconfigured autonomous driving algorithm, to a vehicle to be currently driven.

9. The method of claim 8, wherein
the terminal is configured to:
obtain, using a camera, a GPS, and an acceleration sensor which are built inside the terminal, sensor data including the front photographed image, the GPS information, and the acceleration sensor data; and obtain vehicle information via communication with a control system inside the vehicle, so as to synchronize the vehicle information with the sensor data.

10. The method of claim 9, wherein
the storing the daily driving data comprises:
after randomly mixing the received daily driving data, extracting N% (N is a natural number) and classifying them as test data and perform the preliminary learning by using the remaining data except for N% from the entire daily driving data; and evaluating accuracy of the result of the preliminary learning via a cross validation technique for machine learning, which evaluates the result of the preliminary learning by using the test data.

11. The method of claim 10, wherein
the pre-processing the daily driving data comprises:
extracting center point coordinates by detecting marks attached to upper and lower ends of the vehicle's front glass from the front photographed image; finding a horizontal line adjacent to the mark at the lower end and rotating the entire image such that they are parallel to each other; and matching the view angles such that the marks at the upper and lower ends are positioned at a center of the image through image conversion.

12. The method of claim 11, wherein
the pre-processing the daily driving data comprises:
extracting an acceleration measurement period in which the vehicle is stopped for a predetermined time or longer; and converting the acceleration into a vertical component $ACC_{Lon}$ and a horizontal component $ACC_{Lat}$ by using the following Equation:

$$ACC_{Lon} = Ay*\sin\phi_x + Az*\sin(90° - \phi_x) + Ax*\sin\phi_y + Az*\sin(90° - \phi_y)$$

$$ACC_{Lat} = Ax*\sin\phi_y + Az*\sin(90° - \phi_y) + Ay*\sin\phi_x + Az*\sin(90° - \phi_x)$$

$$\phi_x = atan\ (abs(g_z/g_y))$$

$$\phi_y = atan\ (abs(g_z/g_x))$$

wherein, $\phi_x$ represents a tilt angle for an x-axis of the terminal, and $\phi_y$ represents a tilt angle for a y-axis, Ax, Ay, and Az respectively represent x-axis, y-axis, and z-axis values that are measured by the acceleration sensor, and gx, gy, and gz respectively represent gravitational acceleration values of the x-axis, the y-axis, and a z-axis.

13. The method of claim 12, wherein
the learning the pre-processed daily driving data comprises:
learning, through individual autonomous driving algorithms corresponding to respective driving characteristics, the entire daily driving data with a general autonomous driving algorithm; and separately learning the daily driving data that are classified according to at least one of driving characteristics including the type of driving road, the shape of driving road, a route change on a specific road, driving at a specific time, and the weather while driving.

14. The method of claim 8, wherein
the reconfiguring the autonomous driving algorithm comprises:

when a learned model of the machine learning corresponding to the route to be driven exists, selecting an autonomous driving algorithm of the learned model of the corresponding machine learning; and
when a learned model of the machine learning corresponding to the route to be driven does not exist, subdividing the route to be driven, and combining the individual autonomous driving algorithms corresponding to the subdivided routes so as to reconfigure the autonomous driving algorithm customized to the route.

FIG. 1

200

300

100

Network

FIG. 2

| Data acquiring unit | ~ 210 | ~ 200 |
| Data control unit | ~ 220 | |
| Data pre-processing unit | ~ 230 | |
| Machine learning unit | ~ 240 | |
| Route model-generating unit | ~ 250 | |
| Autonomous driving control unit | ~ 260 | |

FIG. 3

```
                          ┌─────────┐
                          │  Start  │
                          └─────────┘
                               │
                               ▼
┌──────────────────────────────────────────────┐
│    Receive daily driving data including front  │
│       photographed image, GPS information,     │
│   acceleration sensor data, and vehicle driving │ ～ S310
│          data of vehicle from terminal         │
│             mounted inside vehicle             │
└──────────────────────────────────────────────┘
                               │
                               ▼
┌──────────────────────────────────────────────┐
│   Evaluate accuracy of daily driving data after │
│  performing preliminary learning, and if accuracy │ ～ S320
│      above threshold is calculated, store daily  │
│           driving data in connected database    │
└──────────────────────────────────────────────┘
                               │
                               ▼
┌──────────────────────────────────────────────┐
│      Match view angles of road image of front   │
│        photographed image with image conversion │
│   technique, pre-processes daily driving data   │ ～ S330
│         by converting acceleration sensor data  │
│            into acceleration components         │
└──────────────────────────────────────────────┘
                               │
                               ▼
┌──────────────────────────────────────────────┐
│    Learn pre-processed daily driving data by   │
│   applying it to autonomous driving algorithm  │ ～ S340
│       through preset machine learning engine   │
└──────────────────────────────────────────────┘
                               │
                               ▼
┌──────────────────────────────────────────────┐
│   Reconfigure, using learned model of machine  │
│       learning, autonomous driving algorithm   │ ～ S350
│         according to route to be currently driven │
└──────────────────────────────────────────────┘
                               │
                               ▼
┌──────────────────────────────────────────────┐
│     Provide, to vehicle to be currently driven, │
│   command for controlling autonomous vehicle   │ ～ S360
│     corresponding to reconfigured autonomous   │
│               driving algorithm                │
└──────────────────────────────────────────────┘
                               │
                               ▼
                          ┌─────────┐
                          │   End   │
                          └─────────┘
```

FIG. 4

FIG. 5

FIG. 6

Europäisches
Patentamt
European
Patent Office
Office européen
des brevets

# EUROPEAN SEARCH REPORT

**Application Number**

EP 18 18 1093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/135621 A1 (LEE DONG HWA [KR] ET AL) 18 May 2017 (2017-05-18)<br>* the whole document * | 1-14 | INV.<br>G05D1/02 |
| A | EP 3 219 564 A1 (IMRA EUROPE S A S [FR]) 20 September 2017 (2017-09-20)<br>* the whole document * | 1-14 | |
| A | GB 2 373 117 A (INTELLIGENT TECH INT INC [US]) 11 September 2002 (2002-09-11)<br>* the whole document * | 1-14 | |

**TECHNICAL FIELDS SEARCHED (IPC)**

G05D

The present search report has been drawn up for all claims

| Place of search | Date of completion of the search | Examiner |
|---|---|---|
| Munich | 18 January 2019 | Thomann, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 1093

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2019

| Patent document cited in search report | | Publication date | Patent family member(s) | | Publication date |
|---|---|---|---|---|---|
| US 2017135621 | A1 | 18-05-2017 | KR 20170057084 A<br>US 2017135621 A1<br>US 2018325442 A1 | | 24-05-2017<br>18-05-2017<br>15-11-2018 |
| EP 3219564 | A1 | 20-09-2017 | NONE | | |
| GB 2373117 | A | 11-09-2002 | DE 10149206 A1<br>GB 2373117 A | | 06-02-2003<br>11-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170150589
- KR 1020150066303